# EUROPÄISCHE PATENTSCHRIFT

(11) **EP 3 849 773 B1**
(45) Veröffentlichungstag und Bekanntmachung des Hinweises auf die Patenterteilung: **28.01.2026**
(21) Anmeldenummer: 19769412.8
(22) Anmeldetag: 10.09.2019
(51) Int. Cl.: B29C 48/255, B29C 48/25, B29C 48/395, B29C 48/00, B29C 48/72

(54) **VERFAHREN UND VORRICHTUNG ZUR HERSTELLUNG EINER POLYMERFOLIE**
METHOD AND DEVICE FOR PRODUCING A POLYMER FILM
PROCÉDÉ ET DISPOSITIF POUR FABRIQUER UN FILM POLYMÈRE

(30) Priorität: 13.09.2018 DE 102018215613
(43) Veröffentlichungstag der Anmeldung: 21.07.2021
(73) Patentinhaber: Robert Bosch GmbH, 70442 Stuttgart (DE)
(72) Erfinder: MUSIALEK, Matthias, 70563 Stuttgart (DE); HARBORD, Anika, 71093 Weil Im Schoenbuch (DE)
(86) Internationale Anmeldenummer: PCT/EP2019/074053
(87) Internationale Veröffentlichungsnummer: WO 2020/053185

(56) Entgegenhaltungen:
- WO-A1-01/82403
- CN-A- 101 235 914
- DE-C1- 3 815 897
- DE-U1- 202009 011 114
- DE-U1- 202013 001 692
- DE-U1- 202014 005 235
- JP-A- 2012 183 691

## Beschreibung

### Stand der Technik

Moderne elektrochemische Zellen, insbesondere für Lithiumionenbatterien, verwenden zunehmend Feststoffelektrolyte anstelle von flüssigen Elektrolyten. Die Herstellung von Feststoffelektrolyt enthaltenden Schichten kann mittels Extrusionsverfahren erfolgen. Für die Verwendung in elektrochemischen Zellen müssen dem Feststoffelektrolyt in der Regel größere Mengen an weiteren Feststoffen beigemischt werden, welche in der elektrochemischen Zelle später bestimmte Aufgabe übernehmen. Als Beispiel seien Aktivmaterialien genannt, welche die Herstellung von Elektrodenfolien ermöglichen, in denen die Zwischenräume zwischen den Aktivmaterialpartikeln mit dem Feststoffelektrolyt ausgefüllt sind.

US2004/0029008 A1 offenbart ein Verfahren zur lösungsmittelfreien Herstellung eines Laminats aus einer Kathodenaktivmaterialschicht, Polymergelelektrolytschicht und Anodenaktivmaterialschicht in einem Co-Extrusionsprozess. Das erhaltene Laminat wird unmittelbar auf eine Stromsammlerfolie auflaminiert.

WO 00/51806 beschreibt ein Verfahren zur Herstellung von Mehrschichtkompositstrukturen, durch Co-Extrusion mindestens zweier plastisch verformbarer Materialzusammensetzungen durch eine Schlitzdüse.

DE 10118639 A1 offenbart ein Verfahren Herstellung von Trilaminaten für Polymer-Lithium-Batterien durch Co-Extrusion. Das Verfahren wird bei Temperaturen von 130°C bis 200°C durchgeführt.

US 2017/028607 beschreibt eine Vorrichtung zur automatischen Regulierung des Drucks einer Extrudereinheit. Dabei wird der Druck mittels eines Ventils im Strömungskanal zwischen dem Extruder und der daran angeschlossenen Düse reguliert. Auch JP2012183691 A offenbart diese Merkmale.

US 2016/023232 offenbart eine Flüssigkeitsabgabevorrichtung, welche eine Abgabeeinheit und eine Druckbeaufschlagungseinheit umfasst. Zwischen der Abgabeeinheit und eine Druckbeaufschlagungseinheit ist eine Ventileinheit angeordnet, welche es ermöglicht, die Druckbeaufschlagungseinheit zu verschließen und die Abgabeeinheit mit einem Unterdruckabschnitt zu verbinden. Die Vorrichtung erlaubt es, die Bildung von Tropfen an der Abgabeeinheit, wenn keine Abgabe erfolgen soll, zu reduzieren.

### Offenbarung der Erfindung

Ein erster Gegenstand der Erfindung ist eine Vorrichtung zur Herstellung einer Folie aus einer Polymerzusammensetzung, umfassend:
(1) mindestens eine Extrudereinheit, umfassend mindestens einen Extrudereinlass, mindestens eine in einem Extruderströmungskanal befindliche Extruderschnecke und mindestens einen Extruderauslass,
(2) mindestens eine Abgabeeinheit, umfassend mindestens einen Abgabeeinheitseinlass, mindestens einen Abgabeeinheitsauslass, sowie mindestens eine formgebende Düse, vorzugsweise ein Schlitzdüse, welche in Fluidverbindung mit dem mindestens einen Abgabeeinheitsauslass angeordnet ist, und
(3) mindestens eine Verteileinheit, umfassend:
   (i) mindestens einen Verteileinheitseinlass, welcher in Fluidverbindung mit dem mindestens einen Extruderauslass angeordnet ist,
   (ii) mindestens einen ersten Verteileinheitsauslass, welcher in Fluidverbindung mit dem mindestens einen Abgabeeinheitseinlass angeordnet ist,
   (iii) mindestens einen zweiten Verteileinheitsauslass, welcher in Fluidverbindung mit mindestens einem Ablaufauslass angeordnet ist,
   (iv) mindestens einen Verteileinheitsströmungskanal, welcher den mindestens einen Verteileinheitseinlass, den mindestens ersten Verteileinheitsauslass und den mindestens zweiten Verteileinheitsauslass miteinander verbindet, und
   (v) mindestens ein Verteilventil welches es ermöglicht, einen Extruderaustrag, welcher über den mindestens einen Verteileinheitseinlass in die Verteileinheit gelangt, auf den mindestens ersten Verteileinheitsauslass und den mindestens zweiten Verteileinheitsauslass zu verteilen.

Die Herstellung von Folien mittels Extrusion einer Polymerschmelze in einem herkömmlichen Extruder ist insbesondere beim Anfahrprozess häufig mit Problemen wie einem temporär hohen Druckaufbau verbunden, welcher gegebenenfalls sogar zur Abschaltung der gesamten Vorrichtung aufgrund von zu hohem Düsendruck und / oder zu hohem Schneckendrehmoment führen kann. Die Erfinder der vorliegenden Anmeldung haben gefunden, dass dieses Problem mit der hierin vorgeschlagenen Vorrichtung effektiv verhindert werden kann.

Die Vorrichtung umfasst mindestens eine Extrudereinheit, umfassend mindestens einen Extrudereinlass, mindestens eine in einem Extruderströmungskanal befindliche Extruderschnecke und mindestens einen Extruderauslass. Der mindestens eine Extrudereinlass dient der Einspeisung des zu extrudierenden Materials, d.h. der Polymerzusammensetzung, in die Extrudereinheit. Innerhalb der Extrudereinheit befindet sich innerhalb eines Extruderströmungskanals mindestens eine Extruderschnecke. Häufig werden mindestens zwei Extruderschnecken beispielsweise in Form eines Doppelschneckenextruders eingesetzt. Diese mindestens zwei Extruderschnecken können dabei gleichläufig oder gegenläufig sein. Um eine möglichst hohe Homogenität in dem zu extrudierten Material zu erreichen, wird häufig ein gegenläufiger Doppelschneckenextruder eingesetzt.

Aufgabe der Extrudereinheit ist es die Polymerzusammensetzung bzw. deren Bestandteile in eine homogene Polymerschmelze zu überführen und den für die Extrusion benötigten Druck aufzubauen. Die für das Aufschmelzen benötige Energie kann häufig bereits durch den Energieeintrag der durch die Extruderschnecken erflogt ausreichend erfolgen. Es ist ebenfalls möglich, dass die Extrudereinheit temperierbar ist, d.h. über eine Temperiervorrichtung verfügt.

Dadurch ist es möglich, der Extrudereinheit Wärme zuzuführen, wenn die mechanisch eingebrachte Energie nicht ausreichend ist, um eine homogene Polymerschmelze zu erhalten. Alternativ kann der Extrudereinheit über die Temperiervorrichtung Wärme entzogen werden, wenn die Temperatur im Innern der Extrudereinheit zu stark ansteigt und eine übermäßige thermische Belastung der Polymerzusammensetzung vermieden werden soll. Vorzugsweise wird die Temperatur der Polymerschmelze im Extruderströmungskanal oberhalb der Schmelztemperatur der Polymerzusammensetzung und auf einem Wert ≤ 160°C gehalten.

Die Extrudereinheit ist mit dem mindestens einen Extruderauslass in Fluidverbindung mit dem mindestens einen mindestens einen Verteileinheitseinlass verbunden. Die Extrudereinheit ist so mit der Verteileinheit verbunden. "In Fluidverbindung" bedeutet im Sinne dieser Anmeldung, dass eine für Fluide, wie Gase, Flüssigkeiten, oder Schmelzen, durchgehend passierbare Verbindung in Form eines Hohlraums vorliegt, welcher die in Fluidverbindung stehenden Bereiche miteinander verbindet.

Die Verteileinheit umfasst neben dem mindestens einen Verteileinheitseinlass mindestens einen Verteileinheitsströmungskanal, mindestens einen ersten und mindestens einen zweiten Verteileinheitsauslass, sowie mindestens ein Verteilventil.

Der mindestens eine Verteileinheitsströmungskanal verbindet den mindestens einen Verteileinheitseinlass, den mindestens ersten Verteileinheitsauslass und den mindestens zweiten Verteileinheitsauslass miteinander. Er ist so ausgebildet, dass eine störungsfreie Strömung des Extruderaustrags ermöglicht wird. Der Verteileinheitsströmungskanal besteht somit mindestens aus einem Hauptkanal, welcher den mindestens einen Verteileinheitseinlass und den mindestens ersten Verteileinheitsauslass miteinander in Fluidverbindung verbindet, und einem Nebenkanal, welcher den mindestens einen Verteileinheitseinlass und den mindestens zweiten Verteileinheitsauslass miteinander in Fluidverbindung verbindet.

Innerhalb des Verteileinheitsströmungskanals ist das mindestens eine Verteilventil angeordnet. Ein Verteilventil im Sinne dieser Erfindung ist jede Vorrichtung, die die Verteilung der Polymerschmelze auf den Hauptkanal und den Nebenkanal des Verteileinheitsströmungskanals vorzugsweise stufenlos regulieren kann. Das Verteilventil ist so ausgestaltet, dass es ermöglicht, den Extruderaustrag, welcher über den mindestens einen Verteileinheitseinlass in die Verteileinheit gelangt, auf den mindestens ersten Verteileinheitsauslass und den mindestens zweiten Verteileinheitsauslass zu verteilen. Das Verteilventil kann beispielsweise ein Dreiwegeventil sein. In einer Ausführungsform der Erfindung ist das Verteilventil in der Lage den Extruderaustrag vollständig entweder dem mindestens ersten Verteileinheitsauslass oder dem mindestens zweiten Verteileinheitsauslass zuzuleiten. In einer alternativen Ausführungsform ist das Verteilventil in der Lage einen Teil des Extruderaustrags dem mindestens ersten Verteileinheitsauslass und den verbliebenen Teil dem mindestens zweiten Verteileinheitsauslass zuzuleiten.

Das Verteilventil kann elektrisch, hydraulisch oder mechanisch angesteuert werden. Entsprechende Verteilventile sind dem Fachmann bekannt. Vorzugsweise wird das Verteilventil elektrisch oder hydraulisch angesteuert.

Die Verteileinheit umfasst mindestens einen ersten Verteileinheitsauslass, welcher in Fluidverbindung mit dem mindestens einen Abgabeeinheitseinlass der Abgabeeinheit verbunden ist. Die Abgabeeinheit wird nachfolgend näher beschrieben.

Die Verteileinheit umfasst mindestens einen zweiten Verteileinheitsauslass, welcher in Fluidverbindung mit mindestens einem Ablaufauslass angeordnet ist. Der Ablaufauslass kann wiederum mit dem Extrudereinlass verbunden sein, um so die Polymerzusammensetzung, welche die Vorrichtung über den Ablaufauslass verlässt, dem Prozess wieder zuzuführen.

Die Verteileinheit umfasst vorzugsweise ebenfalls eine Temperiervorrichtung, welche die Temperatur innerhalb der Verteileinheit oberhalb der Schmelztemperatur der Polymerzusammensetzung und auf einem Wert ≤ 160°C hält.

Die Abgabeeinheit der erfindungsgemäßen Vorrichtung umfasst mindestens einen Abgabeeinheitseinlass, mindestens einen Abgabeeinheitsauslass, sowie mindestens eine formgebende Düse. Der Abgabeeinheitseinlass ist in Fluidverbindung mit dem ersten Verteileinheitsauslass verbunden und wird so während des Prozesses mit der homogenen Polymerschmelze aus der Extrudereinheit versorgt. Über einen Abgabeeinheitsströmungskanal innerhalb der Abgabeeinheit ist der Abgabeeinheitseinlass zudem mit dem Abgabeeinheitsauslass verbunden. Dieser ist wiederum in Fluidverbindung mit mindestens einer formgebenden Düse verbunden, insbesondere mit einer Schlitzdüse vorzugsweise eine Breitschlitzdüse. Diese ermöglicht es, die Polymerschmelze bereits zu Polymerschichten vorzuformen.

Die Abgabeeinheit umfasst vorzugsweise ebenfalls eine Temperiervorrichtung, welche die Temperatur innerhalb der Abgabeeinheit oberhalb der Schmelztemperatur der Polymerzusammensetzung und auf einem Wert ≤ 160°C hält.

In einer bevorzugten Ausführungsform der Erfindung ist der Abgabeeinheit zusätzlich mindestens eine Walze nachgeordnet. Diese ermöglicht es, die vorgeformte Polymerschmelze nach der Abgabe aus der Abgabevorrichtung weiter zu Formen und so eine Polymerfolie gewünschter Stärke herzustellen. Vorzugsweise ist die mindestens eine Walz ebenso wie die Extrudereinheit temperierbar. In einer besonders bevorzugten Ausführungsform umfasst die Vorrichtung eine Vielzahl nachgeordneter Walzen, beispielsweise in Form eines Kalanders.

Ein weiterer Gegenstand der Erfindung ist ein Verfahren zur Herstellung einer Folie aus einer Polymerzusammensetzung, wobei das Verfahren die folgenden Verfahrensschritte umfasst:
(a) Bereitstellen einer Polymerschmelze aus mindestens einer Polymerzusammensetzung;
(b) Extrudieren der Polymerschmelze in mindestens einer Extrudereinheit, welcher über mindestens einen Extruderauslass in Fluidverbindung mit mindestens einer Verteileinheit angeordnet ist, welche mindestens folgende Elemente umfasst:
   (i) mindestens einen Verteileinheitseinlass, welcher in Fluidverbindung mit dem mindestens einen Extruderauslass angeordnet ist,
   (ii) mindestens einen ersten Verteileinheitsauslass, welcher in Fluidverbindung mit dem mindestens einen Abgabeeinheitseinlass angeordnet ist,
   (iii) mindestens einen zweiten Verteileinheitsauslass, welcher in Fluidverbindung mit mindestens einem Ablaufauslass angeordnet ist,
   (iv) mindestens einen Verteileinheitsströmungskanal, welcher den mindestens einen Verteileinheitseinlass, den mindestens ersten Verteileinheitsauslass und den mindestens zweiten Verteileinheitsauslass miteinander verbindet, und
   (v) mindestens ein Verteilventil welches es ermöglicht, einen Extruderaustrag, welcher über den mindestens einen Verteileinheitseinlass in die Verteileinheit gelangt, auf den mindestens ersten Verteileinheitsauslass und den mindestens zweiten Verteileinheitsauslass zu verteilen;
(c) Einleiten der Polymerschmelze über den mindestens ersten Verteileinheitsauslass in eine Abgabeeinheit, umfassend mindestens einen Abgabeeinheitseinlass, mindestens einen Abgabeeinheitsauslass, sowie mindestens eine formgebende Düse, welche in Fluidverbindung mit dem mindestens einen Abgabeeinheitsauslass angeordnet ist, sodass die Polymerschmelze die Abgabeeinheit durch die mindestens eine formgebende Düse verlässt, um so eine vorgeformte Polymerschmelze zu erhalten; und
(d) gegebenenfalls weiteres Formen der vorgeformten Polymerschmelze, insbesondere Walzen der vorgeformten Polymerschmelze, um eine Folie gewünschter Stärke zu erhalten,
dadurch gekennzeichnet, dass zu Beginn des Verfahrens der Extruderaustrag ganz oder teilweise über den mindestens einen zweiten Verteileinheitsauslass an den mindestens einem Ablaufauslass abgegeben wird, bis der Extruderaustrag ausreichend homogene Eigenschaften, insbesondere eine ausreichend homogene Zusammensetzung und eine ausreichend homogene Viskosität, erreicht hat.

Vorzugsweise wird zur Durchführung des Verfahrens die zuvor beschriebene Vorrichtung verwendet.

Zunächst wird eine Polymerschmelze aus einer Polymerzusammensetzung bereitgestellt. Die Polymerzusammensetzung umfasst dabei mindestens ein thermoplastisches, organisches Polymer. In einer bevorzugten Ausführungsform umfasst die Polymerzusammensetzung mindestens ein thermoplastisches, organisches Polymer und mindestens ein partikelförmiges und/oder faserförmiges Material. Unter partikelförmigem und/oder faserförmigem Material ist in diesem Zusammenhang ein Material zu verstehen, welches in der Polymerschmelze als Feststoff vorliegt, d.h. selbst einen höheren Schmelzpunkt aufweist. Eine Polymerschmelze im Sinne der Erfindung umfasst somit auch schmelzflüssige Polymerzusammensetzungen, die geschmolzene Polymerbestandteile und feste Bestandteile, insbesondere in Form von Partikeln umfassen. Partikelförmige Materialien weisen dabei üblicherweise einen mittleren Partikeldurchmesser von 1 bis 1000 µm, insbesondere 20 bis 500 µm auf. Der Partikeldurchmesser kann je nach Art des partikelförmigen Materials stark variieren. Faserförmige Materialien haben üblicherweise einen Faserdurchmesser von 1 bis 1000 µm, insbesondere 20 bis 500 µm, und eine Faserlänge von 0,1 bis 10 mm.

Gerade Polymerschmelzen, welche partikelförmiges Material umfassen, können zu erhöhten Drücken während des Extrusionsprozesses führen. Für Polymerzusammensetzungen, die partikelförmige und/oder faserförmige Materialien umfassen, ist das vorliegende Verfahren daher besonders vorteilhaft einsetzbar.

In einer Ausführungsform der Erfindung umfasst die Polymerzusammensetzung mindestens einen polymeren Feststoffelektrolyt und mindestens ein partikelförmiges Material aus der Gruppe, bestehend aus mindestens einem Elektrodenaktivmaterial, mindestens einem Leitzusatz, mindestens einem anorganischen Festelektrolyt sowie Mischungen der vorgenannten.

Geeignete polymere Festelektrolyte umfassen als Polymerbestandteil beispielsweise Polyethylenoxid, Polypentylmalonate, Polypentyloxalate, Poly(1,3-nonyldiketone), Polybutanoicanhydride, Polypentenoicanhydride, Polycyanoethylacrylate und / oder Polycyanoalkylacrylate. Üblicherweise umfasst der polymere Festelektrolyt zudem mindestens ein Lithiumsalz zur Verbesserung der ionischen Leitfähigkeit, beispielsweise Lithium-Bis(trifluoromethan)sulfonimid (LiTFSI).

Neben dem Lithiumsalz können als partikelförmige Materialien verschiedene Materialien je nach vorgesehenem Verwendungszweck der herzustellenden Folie eingesetzt werden.

Die zuvor beschriebenen Polymerzusammensetzung aus polymerem Festelektrolyt inklusive Lithiumsalz können beispielsweise für die Herstellung von Separatorfolien eingesetzt werden. Als weitere partikelförmige Materialien können diesen zudem anorganische Festelektrolyte wie sulfidische Gläser, Perowskit-Verbindungen der Formel Li₃ₓLa_{2/3-x}TiO₃ (mit 2/3 ≥ x ≥ 0, LLTO) Granat-Verbindungen wie Li₇La₃Zr₂O₁₂ (LLZO), Glaskeramiken vom NASICON-Typ, usw., zugegeben werden.

Die zuvor beschriebenen Polymerzusammensetzungen können auch zur Herstellung von Elektrodenfolien eingesetzt werden, indem der Polymerzusammensetzung mindestens ein Elektrodenaktivmaterial zugesetzt wird.

Als geeignete partikelförmige Kathodenaktivmaterialien sind beispielhaft zu nennen: Schichtoxide wie Lithium-Nickel-Kobalt-Aluminium-Oxide (NCA; z.B. LiNi_{0,8}Co_{0,15}Al_{0,05}O₂), Lithium-Nickel-Kobalt-Mangan-Oxide (NCM; z.B. LiNi_{0,8}Mn_{0,1}Co_{0,1}O₂ (NMC (811)), LiNi_{0,33}Mn_{0,33}CO_{0,33}O₂ (NMC (111)), LiNi_{0,5}Mn_{0,3}Co_{0,2}O₂ (NMC (532)), LiNi_{0,6}Mn_{0,2}Co_{0,2}O₂ (NMC (622)), Hochenergie-Lithium-Nickel-Kobalt-Mangan-Oxide (überlithiierte Lithium-Nickel-Kobalt-Mangan-Oxide), LiCoO₂, Olivine wie Lithium-Eisen-Phosphat (LiFePO₄, LFP), Lithium-Mangan-Phosphat (LMP) oder Lithium-Kobalt-Phosphat (LCP), Spinelle wie LiMn₂O₄, Li₂MnO₃, Li_{1.17}Ni_{0.17}Co_{0.1}Mn_{0.56}O₂ oder LiNiO₂, Lithium-reiche FCC wie Li₂MO₂F (mit M = V, Cr), Konversionsmaterialien wie FeF₃ und / oder schwefelhaltige Materialien wie SPAN.

Als geeignete partikelförmige Anodenaktivmaterialien sind beispielhaft zu nennen: Graphit, amorphen Kohlenstoff (hard carbon), Silizium, Li-Titanat und / oder metallisches Lithium.

Zur Verbesserung der elektrischen Leitfähigkeit können insbesondere den Polymerzusammensetzungen zur Herstellung von Elektrodenfolien Leitadditive wie Ruß, Graphit, Graphen, Kohlenstofffasern und/oder Kohlenstoffnanoröhrchen zugesetzt werden. Diese sind partikelförmige bzw. faserförmige Materialien im Sinne dieser Anmeldung. Als weitere faserförmige Materialien sind beispielsweise faserförmige Additive wie Glasfasern, Polymerfasern (insbesondere polymere Bindemittelfasern) oder Carbonfasern zu nennen.

Die Polymerzusammensetzung umfasst vorzugsweise mindestens 30 Gew.-% an partikelförmigem und/oder faserförmigem Material, stärker bevorzugt mindestens 50 Gew.-% und insbesondere mindestens 60 Gew.-%, bezogen auf das Gesamtgewicht der Polymerzusammensetzung. Die Polymerzusammensetzung umfasst vorzugsweise höchstens 90 Gew.-% an partikelförmigem und/oder faserförmigem Material, stärker bevorzugt höchstens 85 Gew.-% und insbesondere höchstens 75 Gew.-%, bezogen auf das Gesamtgewicht der Polymerzusammensetzung.

Die zuvor beschriebene Polymerzusammensetzung wird in einem ersten Verfahrensschritt als Polymerschmelze bereitgestellt. Die Polymerschmelze kann dabei separat hergestellt und als solche in die Extrudereinheit eingebracht werden, oder in der Extrudereinheit aus der Polymerzusammensetzung erzeugt werden. Vorzugsweise wird die Polymerschmelze unmittelbar in der Extrudereinheit durch aufschmelzen der Polymerzusammensetzung erzeugt.

Die Polymerzusammensetzung kann separat durch Mischen der Bestandteile oder unmittelbar durch Zugabe der Bestandteile in die Extrudereinheit bereitgestellt werden. Vorzugsweise wird die Polymerzusammensetzung durch Zugabe der Bestandteile in die Extrudereinheit bereitgestellt und anschließend unmittelbar in der Extrudereinheit in die Polymerschmelze überführt.

Nach Verlassen der Extrudereinheit wird die Polymerschmelze der zuvor beschriebenen Verteileinheit zugeführt. Diese umfasst ein Verteilventil, welches die Verteilung der Polymerschmelze zur Abgabeeinheit bzw. zum Ablaufauslass regulieren kann. Zu Beginn des vorliegenden Verfahrens, d.h. beim Anlaufen der beschriebenen Vorrichtung nach einem Stillstand, ist die notwendige Homogenität der Polymerschmelze beim Verlassen der Extrudereinheit insbesondere hinsichtlich Zusammensetzung (Anteil an partikelförmigem und/oder faserförmigem Material), Temperatur der Polymerschmelze und / oder Viskosität der Polymerschmelze häufig nicht zu gewährleisten. In die formgebende Düse der Abgabeeinheit eingebracht, würde eine solche Polymerschmelze zu einem starken Druckanstieg in der Vorrichtung führen, was die Abschaltung der gesamten Vorrichtung zur Folge haben kann. Erfindungsgemäß wird daher zu Beginn des Verfahrens das Verteilventil so eingestellt, dass die Polymerschmelze ganz oder teilweise, vorzugsweise ganz, über den Ablaufauslass aus der Vorrichtung verbracht wird. Dieser sogenannte Ausschuss kann verworfen oder dem Verfahren zurückgeführt werden, indem der Ausschuss als Polymerzusammensetzung wieder in die Extrudereinheit eingeführt wird.

Sobald eine stabile, homogene Polymerschmelze an dem Ablaufauslass detektiert wird, wird erfindungsgemäß das Verteilventil so eingestellt, dass die Polymerschmelze ganz oder teilweise, vorzugsweise ganz, über den ersten Verteileinheitsauslass der Abgabeeinheit zugeführt wird.

In der Abgabeeinheit wird die Polymerschmelze vorgeformt und verlässt so die Abgabeeinheit über die formgebende Düse. Vorzugsweise wird eine Schlitzdüse, insbesondere eine Breitschlitzdüse eingesetzt. Man erhält so endlose Polymerschichten, die in einem weiteren Schritt gewalzt bzw. kalandriert werden können, um so Folien der gewünschten Folienstärke zu erhalten.

Die Temperatur der Polymerzusammensetzung bzw. der Polymerschmelze liegt während des Extrudierens, und vorzugsweise während des gesamten Verfahrens in einem Bereich oberhalb der Schmelztemperatur der Polymerzusammensetzung und ≤ 160°C.

Die nach dem erfindungsgemäßen Verfahren hergestellten Polymerfolien eine Folienstärke von ≤ 1 mm, insbesondere ≤ 0,5 mm auf.

Wie bereits zuvor beschrieben wurde, können so mit Hilfe des vorgeschlagenen Verfahrens Polymerfolien hergestellt werden, welche als Aktivmaterialfolien und / oder Festelektrolytfolien für elektrochemische Zelle, insbesondere für Lithium enthaltende Batteriezellen, verwendet werden können.

### Vorteile der Erfindung

Durch das erfindungsgemäße Verfahren bzw. die Verwendung der erfindungsgemäßen Vorrichtung zur Herstellung von Polymerfolien wird es ermöglicht bei der Polymerfolienherstellung das Abschalten der Extrudereinheit aufgrund erhöhten Drucks oder eines erhöhten Drehmoments beim Anfahrprozess zu vermeiden. Zudem hat die Vermeidung unerwünschter Maschinenabschaltungen zur Folge, dass weniger Materialausschuss anfällt. Das erfindungsgemäße Verfahren ist während des Anfahrprozesses zudem energieeffizienter und führt zu einer verringerten Degradation der Polymerzusammensetzung, da es beim Anfahren einem geringeren Druck, einer kürzeren Temperaturbelastung und einer geringeren Scherung ausgesetzt ist.

### Kurze Beschreibung der Zeichnungen

Ausführungsbeispiele der Erfindung werden anhand einer Zeichnung und der nachfolgenden Beschreibung näher erläutert:
- Figur 1: zeigt die schematische Darstellung einer erfindungsgemäßen Vorrichtung im Anfahrprozess; und
- Figur 2: zeigt die schematische Darstellung einer erfindungsgemäßen Vorrichtung im laufenden Prozess.

### Ausführungsformen der Erfindung

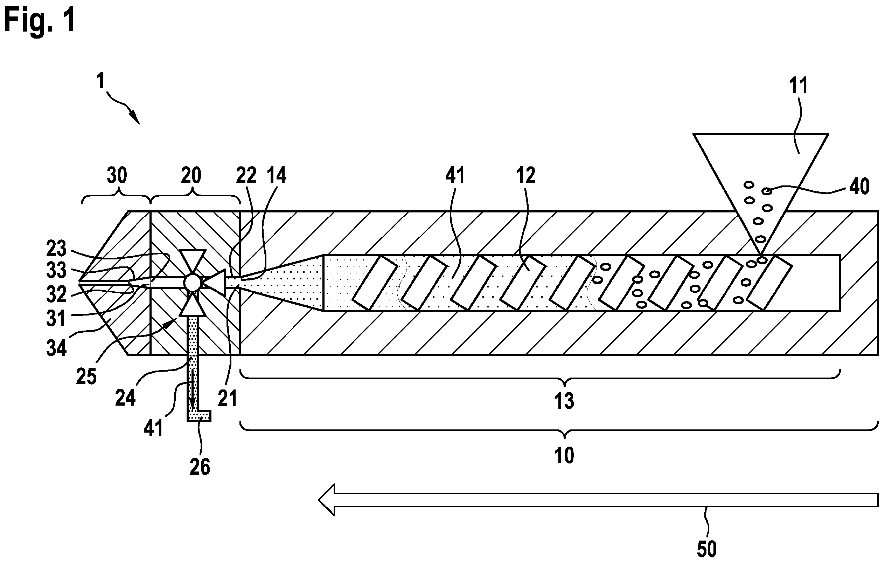

In Figur 1 ist eine Ausführungsform der erfindungsgemäßen Vorrichtung 1 im Anfahrprozess der Polymerfolienherstellung dargestellt. Die Vorrichtung 1 umfasst eine Extrudereinheit 10, eine Verteileinheit 20 und eine Abgabeeinheit 30. Die Extrudereinheit 10 wird über den Extrudereinlass 11 mit der Polymerzusammensetzung 40 beschickt. Die im Extruderströmungskanal 13 rotierende Extruderschnecke 12 fördert die Polymerzusammensetzung 40 in Förderrichtung 50 zum Extruderauslass 14. Dabei wird die Polymerzusammensetzung 40 aufgeschmolzen, die Polymerschmelze 41 wird gebildet und der Druck in der Extrudereinheit 10 wird erhöht. Die Polymerschmelze 41 gelangt über den Extruderauslass 14 und den unmittelbar daran angeschlossenen Verteileinheitseinlass 21 in die Verteileinheit 20. Über den Verteileinheitsströmungskanal 22 gelangt die Polymerschmelze 41 zum Verteilventil 25, welches je nach gewählter Einstellung die Polymerschmelze 41 zum ersten Verteileinheitsauslass 23 oder zum zweiten Verteileinheitsauslass 24 leitet. Die in Figur 1 dargestellte Einstellung des Verteilventils 25 ist so gewählt, dass die Polymerschmelze 41 zum zweiten Verteileinheitsauslass 24 und so zum Ablaufauslass 26 geleitet wird. Die in Figur 1 dargestellte Einstellung des Verteilventils 25 ermöglicht so das erfindungsgemäße Anfahren der Vorrichtung ohne die Gefahr einer Abschaltung aufgrund erhöhter Drücke oder Drehmomente einzugehen.

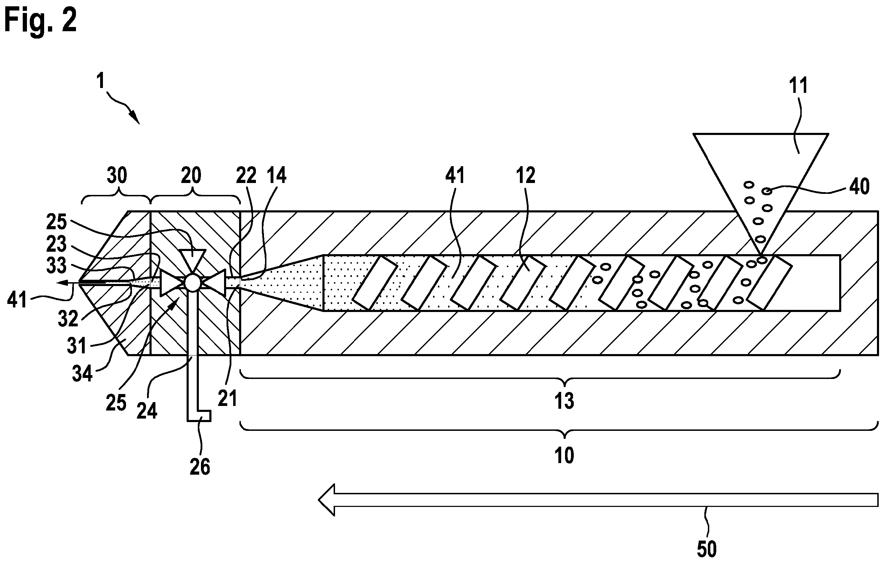

In Figur 2 ist die Vorrichtung aus Figur 1 dargestellt, mit dem Unterschied dass die Einstellung des Verteilventils 25 so gewählt ist, dass die Polymerschmelze 41 über den erste Verteileinheitsauslass 23 in die Abgabeeinheit 30 eingespeist wird. Die Abgabeeinheit verfügt über einen Abgabeeinheitseinlass 31, einen Abgabeeinheitsauslass 32 und einen Abgabeeinheitsströmungskanal 33, welcher den Abgabeeinheitseinlass 31 und den Abgabeeinheitsauslass 32 miteinander verbindet. An dem Abgabeeinheitsauslass 32 ist eine formgebende Düse 34, vorliegend eine Schlitzdüse angeordnet, welche Polymerschmelze 41 zu einer Polymerschichten vorformt. Die nachfolgend optional angeordneten Walzen, insbesondere Kalander, sind vorliegend nicht dargestellt. Sämtliche teile der Vorrichtung sind mittels Temperiervorrichtungen auf eine Temperatur oberhalb der Schmelztemperatur der Polymerzusammensetzung und einem Wert ≤ 160°C temperierbar.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung einer Folie aus einer Polymerzusammensetzung (40), wobei das Verfahren die folgenden Verfahrensschritte umfasst:
(e) Bereitstellen einer Polymerschmelze (41) aus mindestens einer Polymerzusammensetzung (40);
(f) Extrudieren der Polymerschmelze (41) in mindestens einer Extrudereinheit (10), welcher über mindestens einen Extruderauslass (14) in Fluidverbindung mit mindestens einer Verteileinheit (20) angeordnet ist, welche mindestens folgende Elemente umfasst:
(vi) mindestens einen Verteileinheitseinlass (21), welcher in Fluidverbindung mit dem mindestens einen Extruderauslass (14) angeordnet ist,
(vii) mindestens einen ersten Verteileinheitsauslass (23), welcher in Fluidverbindung mit dem mindestens einen Abgabeeinheitseinlass (31) angeordnet ist,
(viii) mindestens einen zweiten Verteileinheitsauslass (24), welcher in Fluidverbindung mit mindestens einem Ablaufauslass (26) angeordnet ist,
(ix) mindestens einen Verteileinheitsströmungskanal (22), welcher den mindestens einen Verteileinheitseinlass (21), den mindestens ersten Verteileinheitsauslass (23) und den mindestens zweiten Verteileinheitsauslass (24) miteinander verbindet, und
(x) mindestens ein Verteilventil (25) welches es ermöglicht, einen Extruderaustrag, welcher über den mindestens einen Verteileinheitseinlass (21) in die Verteileinheit (20) gelangt, auf den mindestens ersten Verteileinheitsauslass (23) und den mindestens zweiten Verteileinheitsauslass (24) zu verteilen;
(g) Einleiten der Polymerschmelze (41) über den mindestens ersten Verteileinheitsauslass (23) in eine Abgabeeinheit (30), umfassend mindestens einen Abgabeeinheitseinlass (31), mindestens einen Abgabeeinheitsauslass (32), sowie mindestens eine formgebende Düse (34), welche in Fluidverbindung mit dem mindestens einen Abgabeeinheitsauslass (32) angeordnet ist, sodass die Polymerschmelze (41) die Abgabeeinheit (30) durch die mindestens eine formgebende Düse (34) verlässt, um so eine vorgeformte Polymerschmelze (41) zu erhalten; und
(h) gegebenenfalls weiteres Formen der vorgeformten Polymerschmelze (41), insbesondere Walzen der der vorgeformten Polymerschmelze (41), um eine Folie gewünschter Stärke zu erhalten,
**dadurch gekennzeichnet, dass** zu Beginn des Verfahrens der Extruderaustrag ganz oder teilweise über den mindestens einen zweiten Verteileinheitsauslass (24) an den mindestens einem Ablaufauslass (26) abgegeben wird, bis der Extruderaustrag ausreichend homogen Eigenschaften erreicht hat.

2. Verfahren nach Anspruch 1, wobei die Polymerschmelze (41) mindestens ein thermoplastisches, organisches Polymer und mindestens ein partikelförmiges und/oder faserförmiges Material umfasst.

3. Verfahren nach Anspruch 1 oder 2, wobei die Temperatur der Polymerschmelze (41) während des Extrudierens ≤ 160°C ist.

4. Verfahren nach einem der Ansprüche 1 bis 3, wobei die Polymerzusammensetzung (40) mindestens einen polymeren Feststoffelektrolyt und mindestens ein partikelförmiges und/oder faserförmiges Material aus der Gruppe, bestehend aus mindestens einem Elektrodenaktivmaterial, mindestens einem Leitzusatz, mindestens einem anorganischen Festelektrolyt sowie Mischungen der vorgenannten, umfasst.

5. Verfahren nach einem der Ansprüche 1 bis 4, wobei die nach diesem Verfahren hergestellte Polymerfolie eine Folienstärke von ≤ 1 mm aufweist.

6. Verfahren nach einem der Ansprüche 1 bis 5, wobei die hergestellte Polymerfolie eine Aktivmaterialfolie und / oder eine Festelektrolytfolie für eine elektrochemische Zelle, insbesondere eine Lithium enthaltende Batteriezelle, ist.

7. Verwendung des Verfahrens nach einem der Ansprüche 1 bis 6 zur Herstellung einer Aktivmaterialfolie und / oder einer Festelektrolytfolie für eine elektrochemische Zelle, insbesondere eine Lithium enthaltende Batteriezelle.

## Claims

1. Process for producing a film from a polymer composition (40), wherein the process comprises the following process steps:
(e) providing a polymer melt (41) composed of at least one polymer composition (40);
(f) extruding the polymer melt (41) in at least one extruder unit (10) that is arranged via at least one extruder outlet (14) in fluid connection with at least one distribution unit (20) comprising at least the following elements:
(vi) at least one distribution unit inlet (21) that is arranged in fluid connection with the at least one extruder outlet (14),
(vii)at least one first distribution unit outlet (23) that is arranged in fluid connection with the at least one delivery unit inlet (31),
(viii) at least one second distribution unit outlet (24) that is arranged in fluid connection with at least one outflow outlet (26),
(ix) at least one distribution unit flow channel (22) that connects the at least one distribution unit inlet (21), the at least first distribution unit outlet (23) and the at least second distribution unit outlet (24) to one another, and
(x) at least one distribution valve (25) that permits an extruder discharge reaching the distribution unit (20) via the at least one distribution unit inlet (21) to be distributed to the at least first distribution unit outlet (23) and to the at least second distribution unit outlet (24);
(g) introducing the polymer melt (41) via the at least first distribution unit outlet (23) into a delivery unit (30) comprising at least one delivery unit inlet (31), at least one delivery unit outlet (32), and at least one shaping nozzle (34) that is arranged in fluid connection with the at least one delivery unit outlet (32), such that the polymer melt (41) exits the delivery unit (30) through the at least one shaping nozzle (34) so as to obtain a preformed polymer melt (41); and
(h) optionally further shaping the preformed polymer melt (41), in particular passing the preformed polymer melt (41) through rollers so as to obtain a film of desired thickness,
**characterized in that**, at the beginning of the process, the extruder discharge is delivered in full or in part via the at least one second distribution unit outlet (24) to the at least one outflow outlet (26) until the extruder discharge has attained sufficiently homogeneous properties.

2. Process according to Claim 1, wherein the polymer melt (41) comprises at least one thermoplastic organic polymer and at least one particulate and/or fibrous material.

3. Process according to Claim 1 or 2, wherein the temperature of the polymer melt (41) during extrusion is ≤ 160°C.

4. Process according to any of Claims 1 to 3, wherein the polymer composition (40) comprises at least one polymeric solid electrolyte and at least one particulate and/or fibrous material from the group consisting of at least one electrode active material, at least one conductive additive, at least one inorganic solid electrolyte and mixtures of the above.

5. Process according to any of Claims 1 to 4, wherein the polymer film produced according to this process has a film thickness of ≤ 1 mm.

6. Process according to any of Claims 1 to 5, wherein the produced polymer film is an active material film and/or a solid electrolyte film for an electrochemical cell, especially a lithium-containing battery cell.

7. Use of the process according to any of Claims 1 to 6 for producing an active material film and/or a solid electrolyte film for an electrochemical cell, especially a lithium-containing battery cell.

## Revendications

1. Procédé de fabrication d'un film à partir d'une composition polymère (40), le procédé comprenant les étapes de procédé suivantes :
(e) fourniture d'une matière fondue de polymère (41) composée d'au moins une composition polymère (40) ;
(f) extrusion de la matière fondue de polymère (41) dans au moins une unité d'extrusion (10), qui est disposée, par au moins une sortie d'extrudeuse (14), en communication fluidique avec au moins une unité de répartition (20), qui comprend au moins des éléments suivants :
(vi) au moins une entrée (21) d'unité de répartition, qui est disposée en communication fluidique avec la sortie d'extrudeuse (14),
(vii)au moins une première sortie (23) d'unité de répartition, qui est disposée en communication fluidique avec l'au moins une entrée (31) d'unité de distribution,
(viii) au moins une deuxième sortie (24) d'unité de répartition, qui est en communication fluidique avec au moins une sortie (26) d'écoulement,
(ix) au moins un canal d'écoulement (22) d'unité de répartition, qui relie l'au moins une entrée (21) d'unité de répartition, l'au moins une première sortie (23) d'unité de répartition et l'au moins une deuxième sortie (24) d'unité de répartition les unes aux autres, et
(x) au moins une soupape de répartition (25) qui permet de répartir une décharge d'extrudeuse, qui parvient dans l'unité de répartition (20) par l'au moins une entrée (21) d'unité de répartition, sur l'au moins une première sortie (23) d'unité de répartition et l'au moins une deuxième sortie (24) d'unité de répartition ;
(g) introduction de la matière fondue de polymère (41) par l'au moins une première sortie (23) d'unité de répartition dans une unité de distribution (30), comprenant au moins une entrée (31) d'unité de distribution, au moins une sortie (32) d'unité de distribution, et au moins une buse de formage (34), qui est disposée en communication fluidique avec l'au moins une sortie (32) d'unité de distribution, si bien que la matière fondue de polymère (41) quitte l'unité de distribution (30) par l'au moins une buse de formage (34) pour obtenir ainsi une matière fondue de polymère préformée (41) ; et
(h) éventuellement, mise en forme ultérieure de la matière fondue de polymère préformée (41), en particulier laminage de la matière fondue de polymère préformée (41) pour obtenir un film d'une épaisseur souhaitée,
**caractérisé en ce qu'**au début du procédé, la décharge d'extrudeuse est distribuée en totalité ou en partie par l'au moins une deuxième sortie (24) d'unité de répartition sur l'au moins une sortie (26) d'écoulement jusqu'à ce que la décharge d'extrudeuse ait atteint des propriétés suffisamment homogènes.

2. Procédé selon la revendication 1, **caractérisé en ce que** la matière fondue de polymère (41) comprend au moins un polymère organique thermoplastique et au moins un matériau particulaire et/ou fibreux.

3. Procédé selon la revendication 1 ou 2, **caractérisé en ce que** la température de la matière fondue de polymère (41) pendant l'extrusion est ≤ 160°C.

4. Procédé selon l'une des revendications 1 à 3, la composition polymère (40) comprenant au moins un électrolyte solide polymère et au moins un matériau particulaire et/ou fibreux choisi dans le groupe constitué d'au moins un matériau actif d'électrode, d'au moins un additif conducteur, d'au moins un électrolyte solide inorganique et de mélanges de ceux-ci.

5. Procédé selon l'une des revendications 1 à 4, le film polymère fabriqué selon ledit procédé présentant une épaisseur de film ≤ 1 mm.

6. Procédé selon l'une des revendications 1 à 5, le film polymère fabriqué étant un film de matériau actif et/ou un film d'électrolyte solide pour une cellule électrochimique, en particulier un élément de batterie contenant du lithium.

7. Utilisation du procédé selon l'une des revendications 1 à 6 pour la fabrication d'une feuille de matériau actif et/ou d'une feuille d'électrolyte solide pour une cellule électrochimique, en particulier un élément de batterie contenant du lithium.
